# EUROPÄISCHE PATENTSCHRIFT

(11) **EP 2 244 919 B1**
(45) Veröffentlichungstag und Bekanntmachung des Hinweises auf die Patenterteilung: **22.08.2018**
(21) Anmeldenummer: 08872557.7
(22) Anmeldetag: 20.12.2008
(51) Int. Cl.: B60T 13/66, B60T 17/18, B60T 8/32

(54) **FESTELLBREMSE FÜR EIN FAHRZEUG UND VERFAHREN ZUM BETRIEB DER FESTSTELLBREMSE**
PARKING BRAKE FOR A VEHICLE AND METHOD FOR OPERATING THE PARKING BRAKE
FREIN DE STATIONNEMENT POUR VÉHICULE, ET PROCÉDÉ PERMETTANT DE FAIRE FONCTIONNER CE FREIN DE STATIONNEMENT

(30) Priorität: 19.02.2008 DE 102008009882
(43) Veröffentlichungstag der Anmeldung: 03.11.2010
(73) Patentinhaber: WABCO GmbH, 30453 Hannover (DE)
(72) Erfinder: BENSCH, Uwe, 30161 Hannover (DE); DJEUTCHOUANG DJIYA, Guy, Alain, 30459 Hannover (DE); FÖRSTER, Henning, 31171 Nordstemmen (DE); ROSENDAHL, Hartmut, 30167 Hannover (DE); STRACHE, Wolfgang, 30966 Hemmingen (DE); STRUWE, Otmar, 30163 Hannover (DE)
(74) Vertreter: Lauerwald, Jörg
(86) Internationale Anmeldenummer: PCT/EP2008/010981
(87) Internationale Veröffentlichungsnummer: WO 2009/103330

(56) Entgegenhaltungen:
- EP-A- 1 538 054
- WO-A-2004/054862
- DE-A1- 19 942 533
- FR-A- 2 830 826

## Beschreibung

Die Erfindung betrifft eine Feststellbremse einer Bremsanlage für ein Fahrzeug und ein Verfahren zum Betrieb der Feststellbremse. Des Weiteren betrifft die Erfindung eine Bremsanlage eines Fahrzeugs mit einer Feststellbremse und ein Verfahren zum Betrieb der Bremsanlage.

Bremsanlagen umfassen neben einer Betriebsbremse üblicherweise eine Feststellbremse, um das Fahrzeug mit eingelegter Bremse abstellen zu können. Eine derartige Feststellbremse wird auch als Parkbremse oder Handbremse bezeichnet.

Feststellbremsen für druckmittelbetriebene Bremsanlagen weisen regelmäßig Federspeicherbremszylinder auf, bei denen eine Speicherfeder die Bremse einlegt, so dass das Fahrzeug gebremst wird bzw. nicht mehr bewegt werden kann. Diese Feststellbremse wird gelöst, indem ein Federspeicherteil eines Federspeicherbremszylinders mit Druckluft beaufschlagt wird, so dass die Speicherfeder komprimiert und damit die Feststellbremse gelöst wird.

Die Druckluftversorgung des Federspeicherteils zum Lösen der Feststellbremse erfolgt mittels einer luftmengenverstärkenden Ventileinrichtung, insbesondere eines Relaisventils. Die luftmengenverstärkende Ventileinrichtung gibt an ihren Ausgang den gleichen Druck ab, der an ihrem Steuereingang anliegt, jedoch mit einer verstärkten Luftmenge, die aus einem Druckluftvorratsbehälter bezogen wird.

Der Steuereingang der luftmengenverstärkenden Ventileinrichtung wird über wenigstens ein Steuerventil mit dem Steuerdruck versorgt. Dieses Steuerventil ist als elektrisch betätigbares Steuerventil ausgebildet, wobei der Schaltzustand dieses Steuerventils von einer elektrischen Steuerungseinrichtung bestimmt wird. Die Steuerungseinrichtung steht wiederum in elektrischer Verbindung mit einer Betätigungseinrichtung zum Betätigen der Feststellbremse. Diese Betätigungseinrichtung kann vom Fahrer des Fahrzeuges betätigt werden. Mittels dieser Betätigungseinrichtung kann der Fahrer die Feststellbremse lösen oder einlegen.

Die Federspeicherbremszylinder weisen üblicherweise einen Federspeicherteil und einen Betriebsbremsteil auf. Die Betriebsbremse wird in herkömmlicher Weise über ein Bremspedal betätigt, wobei die Betriebbremse regelmäßig eine Blockierschutzeinrichtung (Antiblockiersystem oder ABS) umfasst, die ein Blockieren von Rädern des Fahrzeugs aufgrund der Betätigung der Betriebsbremse verhindert.

Dagegen sind Blockierschutzeinrichtungen der Feststellbremse, die ein Blockieren von Rädern des Fahrzeugs aufgrund der Betätigung der Feststellbremse verhindern, weniger verbreitet. Das Dokument DE 199 42 533 A1 oder das Dokument FR2830826 A1 offenbaren jeweils eine Feststellbremse mit einer solchen Blockierschutzeinrichtung, wobei ein Blockieren von Rädern anhand der von Sensoren erfassten Raddrehzahlen verhindert wird. Bei dieser Ausführung tritt das Problem auf, dass bei einem Ausfall der Raddrehzahlsensoren oder der die Sensorsignale verarbeitenden Elektronik eine blockiergeschützte Bremsung bei Betätigung der Feststellbremse nicht mehr möglich ist. Des Weiteren weist diese Ausführung den Nachteil auf, dass bedingt durch die Verwendung von Raddrehzahlsensoren und die für Sensoren benötigten Kabel Kosten verursacht werden.

Die Erfindung hat sich daher die Aufgabe gestellt, eine kostengünstige Feststellbremse mit einer Blockierschutzeinrichtung zu entwickeln, die zuverlässig funktioniert.

Die Erfindung löst diese Aufgabe durch die in den unabhängigen Patentansprüchen angegebenen Merkmale.

Die Erfindung weist den Vorteil auf, dass die Blockierschutzeinrichtung der Feststellbremse für das Verhindern eines Blockieren oder eines erhöhten Schlupfes eines Rades oder mehrerer Räder die Signale von Raddrehzahlsensoren nicht benötigt. Somit kann die Blockierschutzeinrichtung und damit auch die Feststellbremse kostengünstig realisiert werden, da keine Raddrehzahlsensoren und die erforderlichen Kabel benötigt werden. Des Weiteren besitzt die Erfindung für mit Raddrehzahlsensoren ausgestatteten Fahrzeugen den Vorteil, dass selbst bei einem Ausfall, einer Störung oder einer schlechten Qualität der Signale der Raddrehzahlsensoren oder der mit diesen Sensoren verbundenen Signalverarbeitungs- oder Steuereinheit ein blockiergeschütztes Bremsen über die Feststellbremse möglich ist.

Die Erfindung kann in druckmittelbetriebenen als auch in elektromechanisch betriebenen Feststellbremsen eingesetzt werden. Eine Ausführung einer druckmittelbetriebenen Feststellbremsanlage weist eine elektrische Steuereinrichtung zur Steuerung einer elektrisch betätigbaren Ventileinrichtung zur Be- und Entlüftung eines Federspeicherteils mindestens eines Federspeicherbremszylinders auf.

Vorteilhafterweise ermittelt die Blockierschutzeinrichtung einen Schlupf des Rades anhand des Signals, welches von einer Drehzahl eines in dem Fahrzeug vorhandenen Motors, eines Getriebes oder einer Antriebswelle abhängig ist. Anhand des Schlupfes kann ein Blockieren des Rades zuverlässig erkannt und somit verhindert werden.

Vorteilhaft ist bei Vorliegen eines erhöhten Schlupfes die Feststellbremse zumindest teilweise lösbar, indem z. B. bei druckmittelbetriebenen Bremsanlagen der Federspeicherteil eines Federspeicherbremszylinders zumindest teilweise belüftbar ist. Hierdurch wird die Feststellbremse rechtzeitig vor dem Blockieren des Rades gelöst. Unter dem Lösen oder der Deaktivierung der Feststellbremse ist zu verstehen, dass bei einer druckmittelbetriebenen Feststellbremse der Federspeicherteil eines Federspeicherbremszylinders zumindest teilweise belüftet wird. Für elektromechanische Feststellbremsen ist unter dem Lösen oder der Deaktivierung der Feststellbremse zu verstehen, dass die Zuspannkraft elektromechanisch verringert wird.

Eine weitere vorteilhafte Ausführung sieht vor, dass bei einer Reduzierung des Schlupfs auf einen bestimmten Wert die Feststellbremse zumindest teilweise einlegbar ist, indem z. B. bei druckmittelbetriebenen Bremsanlagen der Federspeicherteil eines Federspeicherbremszylinders zumindest teilweise entlüftbar ist. Bei dieser Ausführung wird die Feststellbremse bei einer Reduzierung des Schlupfs auf einen bestimmten Wert betätigt, um eine optimale Bremswirkung der Feststellbremse zu erzielen. Diese Ausführung gestattet den Betrieb der Feststellbremse in einem optimalen Bereich der µ/Schlupf-Kurve. Unter dem Einlegen oder der Aktivierung der Feststellbremse ist zu verstehen, dass bei einer druckmittelbetriebenen Feststellbremse der Federspeicherteil eines Federspeicherbremszylinders zumindest teilweise entlüftet wird. Für elektromechanische Feststellbremsen ist unter dem Einlegen oder der Aktivierung der Feststellbremse zu verstehen, dass die Zuspannkraft elektromechanisch erhöht wird.

Vorteilhafterweise bildet die Blockierschutzeinrichtung anhand des Signals, welches von einer Drehzahl eines in dem Fahrzeug vorhandenen Motors, eines Getriebes oder einer Antriebswelle abhängig ist, ein Referenzsignal, welches die Geschwindigkeit des Fahrzeugs repräsentiert. Durch entsprechende Mittel in der Blockierschutzeinrichtung wird sichergestellt, dass das Referenzsignal durch das Signal, welches von einer Drehzahl eines in dem Fahrzeug vorhandenen Motors, eines Getriebes oder einer Antriebswelle abhängig ist, nur soweit beeinflusst wird, dass die physikalischen Gesetze eingehalten werden. D. h. das Referenzsignal, welches ja die Geschwindigkeit des Fahrzeugs repräsentiert, kann sich nur so stark ändern, wie es die maximale Verzögerung zulässt. Diese Ausführung nutzt den Effekt aus, dass sich die Geschwindigkeit eines Fahrzeugs nicht beliebig stark verändern kann, sondern physikalischen Gesetzen unterliegt. So ergibt sich z. B. die maximale Verzögerung für ein Fahrzeug bei einer Bremsung auf trockenem Beton. Diese maximale Verzögerung kann durch Versuchsfahrten oder Simulationen ermittelt werden. Mit Hilfe dieses physikalischen Modells kann verhindert werden, dass die Referenzgeschwindigkeit beim Blockieren der Antriebsachse dem Signal, welches von einer Drehzahl eines in dem Fahrzeug vorhandenen Motors, eines Getriebes oder einer Antriebswelle abhängig ist, folgt und damit Null wird, obwohl sich das Fahrzeug noch bewegt.

Anhand der aktuellen Differenz zwischen dem Referenzsignal und dem Signal, welches von einer Drehzahl eines in dem Fahrzeug vorhandenen Motors, eines Getriebes oder einer Antriebswelle abhängig ist, ermittelt die Blockierschutzeinrichtung den Schlupf. Bei Vorliegen eines erhöhten Schlupfes entspricht das Signal, welches von einer Drehzahl eines in dem Fahrzeug vorhandenen Motors, eines Getriebes oder einer Antriebswelle abhängig ist, nicht mehr der Geschwindigkeit des Fahrzeuges.

Vorteilhafterweise ist das Signal, welches von einer Drehzahl eines in dem Fahrzeug vorhandenen Motors, eines Getriebes oder einer Antriebswelle abhängig ist, ein im Fahrzeug vorhandenes Tachosignal (TCO-Signal). Dieses Tachosignal, welches z. B. von einem Motor- oder Getriebesteuergerät zur Verfügung gestellt wird, kann von der elektrischen Steuereinrichtung zur Steuerung der elektrisch betätigbaren Ventileinrichtung zur Be- und Entlüftung eines Federspeicherteils eines Federspeicherbremszylinders von einem im Fahrzeug vorhandenen CAN-Bus ausgelesen werden. Für die Ermittlung des Signals, welches von einer Drehzahl eines in dem Fahrzeug vorhandenen Motors, eines Getriebes oder einer Antriebswelle abhängig ist, ist somit kein zusätzlicher Sensor erforderlich.

Bei einer vorteilhaften Ausführung der Erfindung ist die Blockierschutzeinrichtung als Software-Modul realisiert. Das Software-Modui kann z. B. in der elektrischen Steuereinrichtung zur Steuerung der elektrisch betätigbaren Ventileinrichtung zur Be- und Entlüftung eines Federspeicherteils eines Federspeicherbremszylinders implementiert sein. Auch die Implementierung in anderen im Fahrzeug vorhandenen Steuergeräten oder die Aufteilung des Software-Moduls auf mehrere Steuergeräte ist denkbar. Die Realisierung als Software-Modul ermöglicht eine kostengünstige und flexible Ausführung der Blockierschutzeinrichtung.

Des Weiteren umfasst die Erfindung auch eine Bremsanlage eines Fahrzeugs mit der erfindungsgemäßen Feststellbremse als auch Verfahren zum Betrieb der Bremsanlage und Verfahren zum Betrieb der Feststellbremse.

Weitere vorteilhafte Ausführungsformen der Erfindung ergeben sich aus den Unteransprüchen und aus den anhand der beigefügten Zeichnung näher erläuterten Ausführungsbeispielen. In der Zeichnung zeigt:
- Figur 1: eine schematische Darstellung eines Fahrzeugs mit einem Motor, einem Getriebe und einer Antriebswelle, sowie einem Drehzahlsensor,
- Figur 2: eine Druckluftbremsanlage in schematischer Darstellung mit einer elektropneumatischen Bremssteuerungseinrichtung zur Steuerung einer Feststellbremse,
- Figur 3: eine elektropneumatische Bremssteuerungseinrichtung zur Steuerung der Feststellbremse,
- Figur 4: ein Verfahren zur Ermittlung des Schlupfs eines Rades,
- Figur 5: ein Verfahren zum blockiergeschützten Betrieb einer Feststellbremse und
- Figur 6: ein Verfahren zum blockiergeschützten Betrieb einer Bremsanlage eines Fahrzeugs.

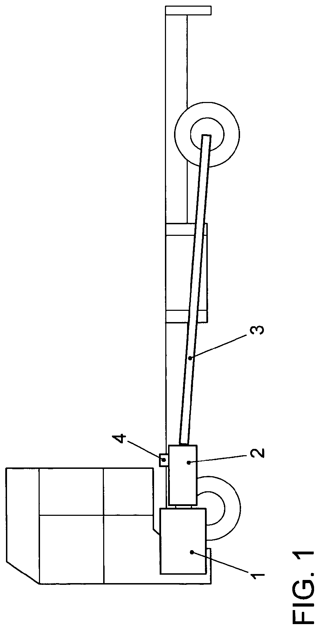

In Figur 1 ist schematisch ein Fahrzeug dargestellt, welches einen Motor 1, ein Getriebe 2 und eine Antriebswelle 3 zum Antrieb des Fahrzeugs aufweist. Ferner ist ein Drehzahlsensor 4 eingezeichnet, der die Getriebeabtriebsdrehzahl erfasst. Anhand des Signals des Drehzahlsensors 4 wird in einer nicht in Figur 1 dargestellten Steuereinheit, wie z. B. einem Motor- oder Getriebesteuergerät, ein Tachosignal (TCO-Signal) berechnet.

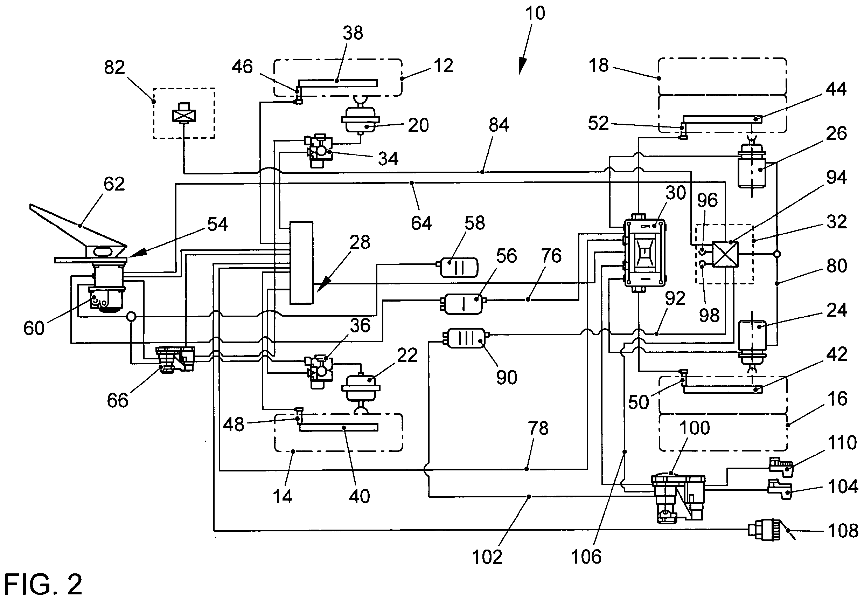

Figur 2 zeigt schematisch eine Druckluftbremsanlage 10 für ein Fahrzeug mit vier Rädern 12, 14, 16, 18. Die Bremsanlage 10 wird elektrisch gesteuert, d. h. die Bremsdruckzumessung zu Bremszylindern 20, 22, 24, 26 der Räder 12, 14, 16, 18 wird durch elektrische und elektronische Steuerelemente gesteuert. Die Bremszylinder 20, 22 der Vorderräder 12, 14 werden von einem Vorderachsbremsteuermodul 28 und die Bremszylinder 24, 26 der Hinterräder 16, 18 von einem Hinterachsbremssteuermodul 30 gesteuert. Die Bremszylinder 24, 26 der Hinterräder 16, 18 sind als Federspeicherbremszylinder 24, 26 mit einem Betriebsbremsteil und einem Federspeicherteil ausgebildet, wobei der Federspeicherteil von einer elektropneumatischen Bremssteuerungseinrichtung zur Steuerung der Feststellbremse, nämlich einem Feststellbremsmodul 32 gesteuert wird. Das Feststellbremsmodul 32 stellt einen wesentlichen Teil der Feststellbremse des Fahrzeuges dar. In dem Feststellbremsmodul 32 sind einige Komponenten der Feststellbremse baulich in einem Gehäuse vereinigt.

Den Bremszylindern 20, 22, 24, 26 sind jeweils elektromagnetisch betätigbare Ventile zur Beeinflussung des Bremsdrucks vorgeschaltet. Für die Vorderräder 12, 14 werden hierfür die Ventile 34, 36 verwendet. Für die Hinterräder 16, 18 sind die jeweiligen Ventile in dem Hinterachsbremssteuermodul 30 integriert.

An den Rädern 12, 14, 16, 18 sind jeweils Sensiermittel angeordnet, welche zur Ermittlung der jeweiligen Raddrehzahl dienen. Die Sensiermittel weisen jeweils ein mit dem Rad 12, 14, 16, 18 drehfest verbundenes Polrad 38, 40, 42, 44 auf, das mit einem induktiv arbeitenden Raddrehzahlsensor 46, 48, 50, 52 elektromagnetisch gekoppelt ist.

Die Bremsanlage 10 weist ferner einen Bremswertgeber 54 auf, der einen Bremswunsch des Fahrers erfasst. Der Bremswertgeber 54 umfasst einen elektrischen und einen pneumatischen Teil. Der pneumatische Teil wird von einem ersten Druckluftvorratsbehälter 56 und einem zweiten Druckluftvorratsbehälter 58 mit Druckluft versorgt. Diese Druckluftvorratsbehälter 56, 58 dienen der Druckluftversorgung der Bremszylinder 20, 22 der Vorderräder 12, 14 bzw. der Bremszylinder 24, 26 der Hinterräder 16, 18. Der pneumatische Teil des Bremswertgebers 54 weist ein zweikreisig ausgeführtes Bremsventil 60 auf, das mechanisch mit einem Bremspedal 62 verbunden und mittels des Bremspedals 62 betätigbar ist. Bei Betätigung des Bremspedals 62 wird von dem Bremsventil 60 ein Drucksignal über eine Druckluftleitung 64 dem Hinterachsbremssteuermodul 30 zugeführt. Ein weiteres, von diesem ersten Drucksignal entkoppeltes zweites Drucksignal wird einer Vorderachsventileinrichtung 66 zugeführt.

Diese Vorderachsventileinrichtung 66 weist ein Vorderachsredundanzventil (nicht separat dargestellt) und eine Druckregelventileinrichtung (nicht separat dargestellt) auf, z.B. ein Proportional-Relaisventil, welches ein elektrisches Signal vom Vorderachsbremssteuermodul 28 in einen pneumatischen Bremsdruck umsetzt.

Die Vorderachsventileinrichtung 66 ist über eine Druckluftleitung mit dem zweiten Druckluftvorratsbehälter 58 verbunden. Sie ist ferner über eine elektrische Leitung mit dem Vorderachsbremssteuermodul 28 verbunden. Im Normalbetrieb wird mittels eines über die elektrische Leitung zugeführten elektrischen Signals ein Druck für die Bremszylinder 20, 22 ausgeregelt. In einem sog. Redundanzfall, bspw. einem Ausfall der elektrischen Energieversorgung für die elektrische Steuerung oder einem Ausfall der gesamten elektrischen Steuerung der Bremsanlage oder Ausfall einzelner Steuerungsmodule der Bremsanlage erfolgt eine Umschaltung auf das Drucksignal des Bremswertgebers 54. Mittels der Vorderachsventileinrichtung 66 kann Druckluft zu den Ventilen 34, 36 geleitet werden.

Das Hinterachsbremssteuermodul 30 ist über eine pneumatische Leitung 76 mit dem ersten Druckluftvorratsbehälter 56 verbunden. Das Hinterachsbremssteuermodul 30 weist ebenfalls eine Datenschnittstelle auf, die über eine elektrische Leitung 78 mit einer weiteren Datenschnittstelle des Vorderachsbremssteuermoduls 28 verbunden ist. Über diese Datenschnittstellen tauschen die Module 28, 30 Daten aus. Bspw. empfängt das Hinterachsbremssteuermodul 30 von dem Vorderachsbremssteuermodul 28 den mittels des Bremswertgebers 54 erfassten Bremswunsch des Fahrers und steuert analog wie das Vorderachsbremssteuermodul 28 den Bremsdruck in den Bremszylindern 24, 26 der Hinterräder 16, 18 über in dem Hinterachsbremssteuermodul 30 angeordnete Ventile. Die hierfür erforderliche Druckluft entnimmt das Hinterachsbremssteuermodul 30 dem ersten Druckluftvorratsbehälter 56.

Die Federspeicherbremszylinder 24, 26 weisen einen Betriebsbremsteil und einen Federspeicherteil auf. Die Betriebsbremsteil besteht aus einem Membranteil, welcher pneumatisch mit der Betriebsbremsanlage der Hinterachse verbunden und mit dem eigentlichen Bremsdruck beaufschlagbar ist, sowie aus einem Federspeicherteil, welcher pneumatisch von dem Membranteil getrennt und über gesonderte Druckluftleitungen mit Druckluft beaufschlagbar ist. Der Federspeicherteil bildet einen Teil der Feststellbremse (häufig auch als Parkbremse bzw. Handbremse bezeichnet). Der Federspeicherteil beinhaltet eine Federspeicherfunktion, welche bei Druckluftbeaufschlagung des Federspeicherteils einen Federspeicher vorspannt und dabei eine Bremswirkung der Federspeicherfunktion verhindert bzw. verringert, während sich bei Entlüftung des Federspeicherteils die Speicherfeder entspannt und dabei eine Bremswirkung im Rahmen der Federspeicherfunktion auf die mit dem jeweiligen Federspeicherbremszylinder 24, 26 verbundene Bremse ausübt.

Mittels dieser Federspeicherbremszylinder 24, 26 wird eine Feststellbremsfunktion realisiert, die auch bei Fehlen von Druckluft eine Bremsung bzw. ein Festellen des Fahrzeuges ermöglicht. Die Feststellbremsfunktion tritt auf, wenn der jeweilige Federspeicherteil der Federspeicherbremszylinder 24, 26 unterhalb eines Mindestdruckwertes entlüftet wird. Der Federspeicherteil der Bremszylinder 24, 26 ist über Druckluftleitungen 80 mit dem Feststellbremsmodül 32 pneumatisch verbunden, welches eine Drucksteuerung mit Hilfe elektronischer Steuerungsmittel erlaubt.

Ein manuell betätigbarer Feststellbremssignalgeber 82 ist über eine mehradrige elektrische Leitung 84 mit dem Feststellbremsmodul 32 verbunden. Die elektrischen Einrichtungen in dem Fahrzeug werden von einer nicht dargestellten elektrischen Energieversorgungseinrichtung, z.B. einer Fahrzeugbatterie, über entsprechende elektrische Leitungen mit elektrischer Energie versorgt.

Ein dritter Druckluftvorratsbehälter 90 ist über eine Druckluftleitung 92 mit dem Feststellbremsmodul 32 verbunden. Dieser Druckluftvorratsbehälter 90 dient der Druckluftversorgung des Feststellbremskreises und des Anhängers.

Das Feststellbremsmodul 32 verfügt ferner über einen Eingangsanschluss 94 für das über die Druckluftleitung 64 zugeführte Drucksignal. Das Feststellbremsmodul 32 weist ferner Anschlüsse 96, 98 für die elektrische Energieversorgung und eine Datenschnittstelle auf. Der Anschluss 96 für die Datenschnittstelle dient zur Verbindung mit einem in dem Fahrzeug vorgesehenen Datenbussystem, welches auch als Fahrzeugbus bezeichnet wird. Der Fahrzeugbus dient zum Datenaustausch zwischen verschiedenen in dem Fahrzeug vorgesehenen, eine elektronische Steuerung enthaltende Geräten, wie z.B. den Modulen 28, 30, die hierfür ebenfalls über jeweilige Datenschnittstellenanschlüsse mit dem Fahrzeugbus verbunden sind.

Das beschriebene Fahrzeug ist zur Ankopplung eines Anhängers geeignet. In diesem Zusammenhang wird das bisher beschriebene Fahrzeug auch als Zugfahrzeug und die Einheit aus Zugfahrzeug und Anhänger auch als Fahrzeugzug bezeichnet.

Die Bremsanlage 10 weist ferner ein Anhängersteuerventil 100 auf, welches zur Bremsdrucksteuerung eines ankoppelbaren Anhängers dient. Das Anhängersteuerventil 100 ist zur Druckluftversorgung über eine Druckluftleitung 102 mit dem dritten Druckluftvorratsbehälter 90 verbunden. Das Anhängersteuerventil 100 gibt die von dem Druckluftvorratsbehälter 90 bezogene Druckluft in Abhängigkeit von elektrischen und pneumatischen Steuersignalen gestuft über einen Druckluftanschluss 104 an die Bremsanlage eines angekoppelten Anhängers ab. Zur Steuerung dieser Druckabgabe weist das Anhängersteuerventil 100 einen elektrischen Signaleingang auf, der mit dem Hinterachsbremssteuermodul 30 verbunden ist und über den das Anhängersteuerventil 100 ein elektrisches Signal empfängt, das den Bremswunsch des Fahrers widerspiegelt. Alternativ kann der elektrische Signaleingang auch an das Vorderachsbremssteuermodul 28 angeschlossen sein. Ferner ist ein Drucksteuereingang zum Empfang von pneumatischen Steuersignalen vorgesehen. Der Drucksteuereingang ist über eine Druckluftleitung 106 mit dem Feststellbremsmodul 32 verbunden.

Ein elektrischer Steckanschluss 108 dient der Stromversorgung und Übermittlung von Datensignalen an den Anhänger. Ferner ist ein Druckluftversorgungsanschluss 110 zur Versorgung des Anhängers mit Vorratsdruck vorgesehen.

Die Bremsanlage 10 weist ferner eine (nicht dargestellte) Druckluftversorgungsanlage, bspw. einen von dem Fahrzeugmotor 1 angetriebenen Kompressor, auf, mittels der die Druckluftvorratsbehälter 56, 58, 90 mit Druckluft befüllbar sind.

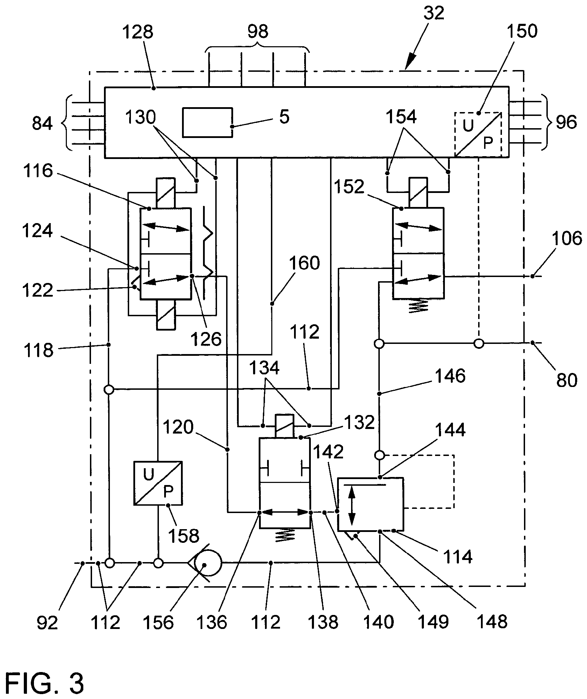

Figur 3 zeigt den Aufbau des Feststellbremsmoduls 32 in schematischer Form. Die Druckluftleitung 92 ist mit einer Druckluftzufuhrleitung 112 verbunden, mittels der einer als Relaisventil 114 ausgebildete luftmengenverstärkenden Ventileinrichtung Druckluft zugeführt wird. Somit wird das Feststellbremssteuermodul 32 mit Druckluft aus dem dritten Druckluftvorratsbehälter 90 versorgt. Ein Bistabilventil 116 ist über eine Druckluftleitung 118 mit der Druckluftzufuhrleitung 112 verbunden. Das Bistabilventil 116 ist als elektromagnetisch betätigbares Ventil, insbesondere als 3/2-Wegeventil ausgebildet. Es weist eine erste Schaltstellung, auch Parkstellung oder Entlüftungsstellung genannt, auf, wie in Figur 3 dargestellt. In dieser Stellung ist ein ausgangsseitiger mit einer Druckluftleitung 120 verbundener Auslass 126 mit einem mittelbar oder unmittelbar mit der Atmosphäre verbundenen Entlüftungsanschluss 122 verbunden.

In einer zweiten Schaltstellung, nachfolgend Druckzufuhrstellung oder Fahrstellung genannt, verbindet das Bistabilventil 116 einen über die Druckluftleitung 118 an seinem Einlass 124 anstehenden Druck unverändert mit dem Auslass 126 bzw. der Druckluftleitung 120. Diese zweite Schaltstellung ist im störungsfreien Fahrbetrieb der Bremsanlage eingestellt. Im störungsfreien Parkzustand des Fahrzeuges wird jedoch die erste Schaltstellung gewählt, so dass die Druckluftleitung 120 entlüftet ist.

Die Stellungen des Bistabilventils 116 werden über eine elektrische Steuereinheit 128 des Feststellbremssteuermoduls 32 geschaltet. Die elektrische Steuereinheit 128 ist zu diesem Zweck über elektrische Leitungen 130 mit dem Bistabilventil 116 elektrisch verbunden. Wird bspw. der Feststellbremssignalgeber 82 betätigt, veranlasst die elektrische Steuereinheit 128 durch Abgabe eines entsprechenden elektrischen Signals das Bistabilventil 116 in seine Parkstellung zu schalten. In entsprechender Weise kann die elektrische Steuereinheit 128 das Bistabilventil 116 aber auch veranlassen, in seine Fahrstellung zu schalten.

Der Auslass 126 des Bistabilventils 116 ist über die Druckluftleitung 120 mit einem sog. Haltenventil 132 verbunden. Dieses ist als elektromagnetisches Ventil ausgebildet, das wiederum über elektrische Leitungen 134 mit der elektrischen Steuereinheit 128 verbunden ist. Es ist daher über die elektrische Steuereinheit 128 elektromagnetisch betätigbar. Dieses Ventil 132 ist als 2/2-Wegeventil ausgebildet. Es erlaubt in seiner in Figur 3 dargestellten Schaltstellung ein Durchströmen von Druckluft von der Druckluftleitung 120, die mit einem Einlass 136 des Haltenventils 132 verbunden ist, zu einem Auslass 138 des Haltenventils, der über eine weitere Druckluftleitung 140 mit einem Steuereingang 142 des Relaisventils 114 verbunden ist.

In der zweiten, nicht in Figur 3 dargestellten Schaltstellung sperrt das Haltenventil 132 die Druckluftströmung ab. Zur Erzielung eines dosierten Durchströmens von Druckluft kann das Ventil 132, z.B. mit einem getakteten Signal über die elektrischen Leitungen 134 von der elektrischen Steuereinheit 128 angesteuert werden. Auf diese Weise kann der Steuereingang 142 des Relaisventils 114 mit einem vorgegebenen Druck beaufschlagt werden.

Das Ventil 132 kann ferner auch als Proportionalventil ausgebildet sein, d.h. es sind durch Ansteuerung des Elektromagneten des Ventils mit geeigneten elektrischen Signalen, z.B. getakteten Signalen, proportionale oder zumindest quasi proportionale Durchlassquerschnitt zwischen den Extremwerten der Durchlassstellung und der Absperrstellung einstellbar.

Das Relaisventil 114 gibt an seinem Auslass 144 einen Ausgangsdruck in eine Druckluftleitung 146 ab, der dem über die Druckluftleitung 140 an den Steuereingang 142 des Relaisventils 114 und somit in eine Steuerkammer des Relaisventils 114 eingesteuerten Druck entspricht, wobei das Relaisventil 114 die hierfür benötigte Druckluft aus der mit einem Einlass 148 des Relaisventils 114 verbundenen Druckluftzufuhrleitung 112 entnimmt. Eine etwaig notwendige Entlüftung der Druckluftleitung 146 erfolgt über einen mittelbar oder unmittelbar mit der Atmosphäre verbundenen Entlüftungsauslass 149 des Relaisventils 114.

Ausgangsseitig des Relaisventils 114 ist an der Druckluftleitung 146 optional ein Drucksensor 150 angeordnet, welcher ein dem Druck in der Druckluftleitung 146 entsprechendes elektrisches Signal an die elektrische Steuereinrichtung 128 abgibt und dort als Istdruckwert ausgewertet wird.

Die Druckluftleitung 146 ist mit der zu den Federspeicherteilen der Federspeicherbremszylinder 24, 26 führenden Druckluftleitung 80 verbunden.

Die Druckluftleitung 146 ist ferner mit einem sog. Anhängerkontrollventil 152 verbunden. Dieses Ventil ist als 3/2-Wegeventil ausgebildet. Mittels dieses Ventils kann eine sog. Anhängerkontrollfunktion aktiviert werden. Als Anhängerkontrollfunktion wird ein Zustand der Bremsanlage 10 bezeichnet, bei dem bei an sich eingelegter Feststellbremsfunktion die Bremsen eines mit dem Zugfahrzeug verbundene Anhängers gelöst werden, um dem Fahrer des Zugfahrzeuges eine Möglichkeit zu geben, zu überprüfen, ob bei abgestelltem Fahrzeugzug die Bremswirkung der Feststellbremse des Zugfahrzeuges alleine ausreicht, um den gesamten Fahrzeugzug am Wegrollen zu hindern. Eine derartige Überprüfung ist insbesondere bei Anhängern erforderlich, bei denen etwa infolge von schleichendem Druckverlust bei längerfristigem Abstellen des Fahrzeuges sich die Bremsen des Anhängers lösen könnten. Auch in diesem Fall muss sichergestellt sein, dass der Fahrzeugzug nicht wegrollt, was demzufolge von der Feststellbremse des Zugfahrzeuges bewirkt werden muss.

Das Anhängerkontrollventil 152 ist zur Betätigung über elektrische Leitung 154 mit der elektrischen Steuereinheit 128 verbunden. In einer ersten, in Figur 3 dargestellten Schaltstellung verbindet das Anhängerkontrollventil 152 die zu dem Anhängersteuerventil 100 führende Druckleitung 106 mit der Druckluftleitung 146. In seiner zweiten Schaltstellung verbindet das Anhängerkontrollventil 152 die Druckluftleitung 106 mit der Druckluftzufuhrleitung 112 bzw. der Druckluftleitung 92 und damit mit dem Druckluftvorrat des dritten Druckluftvorratsbehälters 90. In dieser zweiten Schaltstellung ist die Anhängerkontrollfunktion aktiviert. Hierbei wird der mit der Druckluftleitung 106 verbundene Drucksteuereingang des Anhängersteuerventils 100 mit Vorratsdruck beaufschlagt, was aufgrund einer invertierenden Funktion des Anhängersteuerventils 100 ein Lösen der Bremsen des Anhängers bewirkt.

Bei herkömmlichen Systemen befindet sich in der Druckluftleitung 92, d.h. außerhalb des Feststellbremsmoduls 32 ein Rückschlagventil, das im Falle eines Abreißens des Anhängers oder einer Leckage im Feststellbremskreis verhindert, dass die Federspeicher der Bremszylinder 24, 26 entlüftet werden. Ein derartiges Entlüften würde nämlich zu einem Einlegen der Feststellbremse führen, was im Falle eines Abreißens des Anhängers zu einer gefährlichen Notbremsung des Zugfahrzeuges führen würde.

Bei dem in Figur 3 dargestellten Ausführungsbeispiel des Feststellbremsmoduls 32 befindet sich hingegen das Rückschlagventil 156 in der Druckluftzufuhrleitung 112, d.h. zwischen dem Anschluss der Druckluftleitung 92 an das Feststellbremsmodul 32 und dem Einlass 148 des Relaisventils 114. Das Relaisventil 114 sperrt, wenn der Druck am Einlass 148 des Relaisventils 114 größer ist als der Druck in der Druckleitung 92. Im entgegengesetzten Fall, d.h. wenn der Druck in der Druckleitung 92 größer ist als am Einlass 148 des Relaisventils 114, öffnet das Rückschlagventil 156, so dass der Druck bzw. Druckluft in diese Richtung ungehindert passieren kann.

Das Relaisventil ist ferner derart angeordnet, dass die Abzweigung in der Druckluftzufuhrleitung 112 zur Druckluftleitung 118 zum Bistabilventil 116 vor dem Rückschlagventil 156 liegt, d.h. zwischen dem Rückschlagventil 156 und dem Anschluss der Druckluftleitung 92 an das Feststellbremsmodul 32. Durch diese Anordnung des Rückschlagventils 156 kann der am Steuereingang 142 des Relaisventils 114 anliegende Steuerdruck bei einem unplanmäßigen Ausfall der elektrischen Energieversorgung über das Haltenventil 132 und das sich in Fahrstellung befindende Bistabilventil 116 über die Druckluftleitungen 140, 120 und 118 sowie über die Druckluftleitung 92 zum dritten Druckluftvorratsbehälter 90 verbunden werden. Durch mehrmaliges Betätigen der Betriebsbremse bei ausgefallener elektrischer Energieversorgung fällt zunächst der Druck in den ersten und zweiten Vorratsbehältern 56, 58 und damit auch im dritten Vorratsbehälter 90 ab, da diese miteinander kommunizieren. Ein Druckabfall im dritten Vorratsbehälter 90 führt jedoch aufgrund der Durchlassstellung der Ventile 116 und 132 und damit der miteinander in Verbindung stehenden Druckluftleitungen 92, 118, 120 und 140 zu einem Druckabfall in der Steuerkammer des Relaisventils 114. Dies führt wiederum zu einem Druckabfall in der Druckleitung 146 und damit auch in der Druckluftleitung 80 und folglich zu einer Entlüftung des Federspeicherteils der Federspeicherbremszylinder. Somit werden die Federspeicher aktiviert, so dass die Feststellbremse eingelegt wird.

Vorteilhafterweise ist ferner ein zusätzlicher Drucksensor 158 in die Druckluftzufuhrleitung 112 und zwar zwischen das Rückschlagventil 156 und den Anschluss der Druckluftleitung 92 an das Feststellbremssteuermodul 32 geschaltet. Dieser Drucksensor erzeugt ein dem Druck in der Druckluftzufuhrleitung 112 vor dem Rückschlagventil 156 entsprechendes elektrischen Signal, das über eine elektrische Leitung 160 an die elektrische Steuereinheit 128 abgegeben wird. Wenn im Normalbetrieb der gemessene Druck unter einen kritischen Druck abfällt, wird das Haltenventil 132 bestromt bzw. geschaltet, so dass der Steuerdruck im Steuerraum des Relaisventils 114 eingesperrt wird. Hierdurch kann ein unbeabsichtiges Anlegen der Federspeicherbremsen im Normalbetrieb verhindert werden. Ein Beispiel für einen unplanmäßigen Druckabfall, der von dem Drucksensor 158 gemessen wird, ist bspw. ein Einsatz des Antiblockiersystems, welcher zu einem Druckabfall in den Bremskreisen führt.

Die elektrische Steuereinheit 128 umfasst eine Blockierschutzeinrichtung 5, um ein Blockieren der Feststellbremse zu verhindern. Erfindungsgemäß ist vorgesehen, dass die Blockierschutzeinrichtung 5 das Blockieren oder einen überhöhten Schlupf eines durch die Federspeicherbremszylinder 24, 26 bremsbaren Rades 16, 18 anhand eines Signals, welches von einer Drehzahl eines in dem Fahrzeug vorhandenen Motors 1, eines Getriebes 2 oder einer Antriebswelle 3 abhängig ist, verhindert. Unter einem erhöhten Schlupf ist ein Schlupf zu verstehen, der einen vorgegebenen Grenzwert übersteigt. Die Erfindung weist den Vorteil auf, dass die Blockierschutzeinrichtung 5 der Feststellbremse für das Verhindern eines Blockieren oder eines erhöhten Schlupfes eines Rades 16, 18 die Signale von Raddrehzahlsensoren 46, 48, 52, 50 nicht benötigt. Zur Verhinderung des Blockieren oder eines erhöhten Schlupfes eines Rades 16, 18 wird von der Blockierschutzeinrichtung ausschließlich das Signal, welches von einer Drehzahl eines in dem Fahrzeug vorhandenen Motors 1, eines Getriebes 2 oder einer Antriebswelle 3 abhängig ist, verwendet. Dieses kann ein im Fahrzeug vorhandenes Tachosignal sein, welches z. B. von dem Sensor 4, der die Getriebeabtriebsdrehzahl erfasst, generiert wird. Das Tachosignal wird von einem Getriebe- oder Motorsteuergerät, welches mit dem Sensor 4 verbunden, ist über ein Bussystem an die elektrische Steuereinrichtung 128 der Feststellbremse übertragen und steht dort der Blockierschutzeinrichtung 5 zur Verhinderung des Blockieren oder des erhöhten Schlupfes eines Rades 16, 18 zur Verfügung.

Somit kann die Blockierschutzeinrichtung 5 und damit auch die Feststellbremse kostengünstig realisiert werden, da keine Raddrehzahlsensoren 46, 48, 52, 50 und die erforderlichen Kabel benötigt werden. Des Weiteren besitzt die Erfindung für mit Raddrehzahlsensoren 46, 48, 52, 50 ausgestatteten Fahrzeugen den Vorteil, dass selbst bei einem Ausfall, einer Störung oder einer schlechten Qualität der Signale der Raddrehzahlsensoren 46, 48, 50, 52 oder der mit diesen Sensoren verbundenen Signalverarbeitungs- oder Steuereinheit ein blockiergeschütztes Bremsen über die Feststellbremse möglich ist.

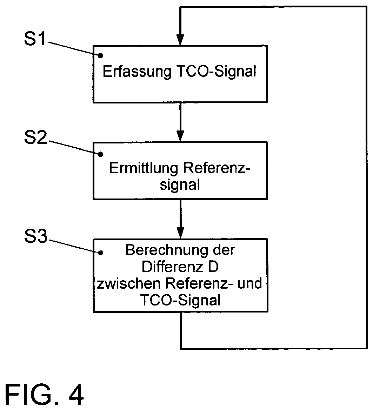

Die Blockierschutzeinrichtung 5 verhindert das Blockieren oder den erhöhten Schlupfes eines Rades 16, 18, indem sie anhand des Tachosignals den Schlupf des Rades 16, 18 ermittelt und in Abhängigkeit des Schlupfes die Feststellbremse löst bzw. den Federspeicherteil der Federspeicherbremszylinder 24, 26 belüftet. In Figur 4 ist ein Verfahren zur Ermittlung des Schlupfes dargestellt. In dem Schritt S1 wird das aktuelle Tachosignal (TCO-Signal) von der Blockierschutzeinrichtung 5 erfasst. In dem Schritt S2 wird anhand des Tachosignals ein Referenzsignal ermittelt. Dieses Referenzsignal ist neben dem Tachosignal auch noch von der maximal möglichen Verzögerung des Fahrzeugs abhängig. Es wird der Effekt genutzt, dass sich die Geschwindigkeit eines Fahrzeugs nicht beliebig stark verändern kann, sondern physikalischen Gesetzen unterliegt. So ergibt sich z. B. die maximale Verzögerung für ein Fahrzeug bei einer Bremsung auf trockenem Beton. Diese maximale Verzögerung kann durch Versuchsfahrten oder Simulationen ermittelt werden. Bei Vorliegen eines erhöhten Schlupfes, entspricht das Tachosignal nicht mehr der Geschwindigkeit des Fahrzeuges. Durch entsprechende Mittel in der Blockierschutzeinrichtung 5 wird sichergestellt, dass das Referenzsignal durch das Tachosignal nur soweit beeinflusst wird, dass die physikalischen Gesetze eingehalten werden. D. h. das Referenzsignal, welches ja die Geschwindigkeit des Fahrzeugs repräsentiert, kann sich nur so stark ändern, wie es die maximale Verzögerung zulässt. In dem Schritt S3 wird die Differenz D zwischen dem Referenzsignal und dem Tachosignal berechnet. Diese Differenz D entspricht dem Schlupf eines Rades 16, 18. Von dem Schritt S3 wird auf den Schritt S1 verzweigt, d. h. die Blockierschutzeinrichtung 5 ermittelt fortlaufend den Schlupf eines Rades 16, 18.

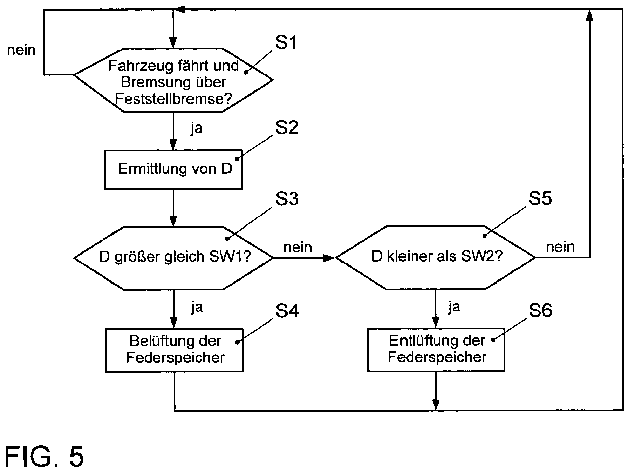

In Figur 5 ist ein Verfahren zum blockiergeschützten Betrieb der Feststellbremse dargestellt. In dem Schritt S1 wird von der Blockierschutzeinrichtung 5 geprüft, ob das Fahrzeug fährt und ein Bremsvorgang der Feststellbremse vorliegt. Falls die Bedingung von S1 erfüllt ist, wird in dem Schritt S2 der aktuelle Wert der Differenz D zwischen dem Referenzsignal und dem Tachosignal gemäß dem in Figur 4 gezeigten Verfahren ermittelt. Andernfalls wird auf S1 verzweigt. In dem Schritt S3 wird geprüft ob D, also der Schlupf eines durch die Feststellbremse gebremsten Rades 16, 18, größer gleich ein vorbestimmter Schwellenwert ist. D. h. es wird geprüft, ob ein erhöhter Schlupf vorliegt. Falls diese Bedingung erfüllt ist, werden in dem Schritt S4 die Federspeicherteile der Federspeicherbremszylinder 24, 26 durch die elektrisch betätigbare Ventileinrichtung 114, 116, 132 belüftet. Falls nicht, wird in dem Schritt S5 geprüft, ob D kleiner als ein vorbestimmter Schwellenwert SW2 ist. Falls diese Bedingung erfüllt ist, werden in dem Schritt S6 die Federspeicherteile der Federspeicherbremszylinder 24, 26 durch die elektrisch betätigbare Ventileinrichtung 114, 116, 132 zumindest teilweise entlüftet. Andernfalls wird auf den Schritt S1 verzweigt. Das in Figur 5 dargestellte Verfahren läuft fortwährend in der Blockierschutzeinrichtung 5 ab; von den Schritten S4 und S6 wird auf S1 verzweigt. Durch das Verfahren wird sichergestellt, dass eine optimale Bremswirkung der Feststellbremse bei gleichzeitiger Kontrollierbarkeit des Fahrzeugs erreicht wird, da die Feststellbremse im optimalen Bereich der µ/Schlupf-Kurve betrieben wird.

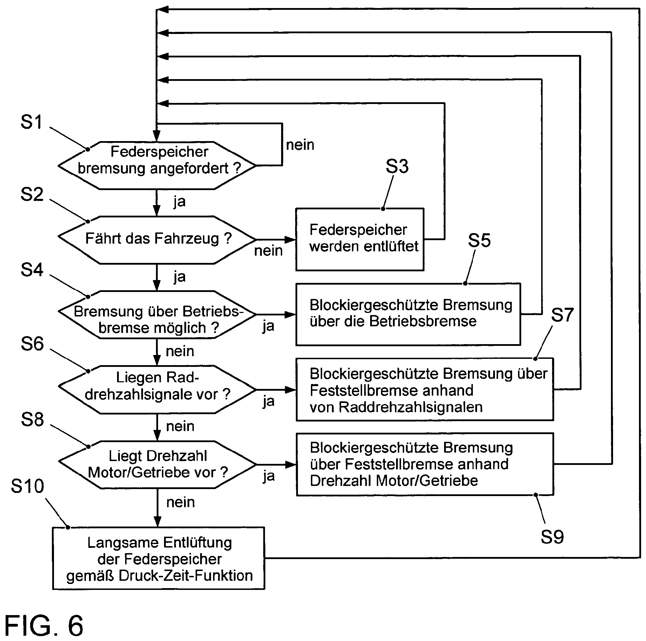

In Figur 6 wird ein Verfahren zum blockiergeschützten Betrieb der Bremsanlage des Fahrzeugs gezeigt. In dem Schritt S1 wird geprüft, ob eine Anforderung für die Betätigung Feststellbremse vorliegt. Diese Anforderung für die Betätigung der Feststellbremse kann durch den Feststellbremssignalgeber 82 oder durch ein Bremsanforderungssignal der Betriebsbremse generiert werden. Das Bremsanforderungssignal der Betriebsbremse wird bei einem Ausfall der Betriebsbremse von dem Modul 30 generiert und der elektrischen Steuereinrichtung 128 der Feststellbremse übermittelt. Weitere Einzelheiten bezüglich der Bremsanforderung der Betriebsbremse können dem Dokument DE 103 36 611 A1, insbesondere dem Absatz [0088], entnommen werden. Ist die in S1 angegebene Bedingung erfüllt, so wird in dem Schritt S2 geprüft, ob das Fahrzeug fährt. Falls nicht, wird der Schritt S1 erneut durchgeführt.

Falls die Bedingung des Schrittes S2 nicht erfüllt ist, wird in dem Schritt S3 die Feststellbremse eingelegt, indem die Federspeicherteile der Federspeicherbremszylinder 24, 26 durch die elektrisch betätigbare Ventileinrichtung 114, 116, 132 entlüftet werden. Nach dem Schritt S3 wird der Schritt S1 erneut durchgeführt. Falls die Bedingung des Schrittes S2 erfüllt ist, wird in dem Schritt S4 geprüft, ob eine Bremsung über die Betriebsbremse möglich ist. Falls diese Bedingung erfüllt wird, erfolgt in dem Schritt S5 eine blockiergeschützte Bremsung über die Betriebsbremse und darauf folgend wird der Schritt S1 erneut durchgeführt. Andernfalls wird in dem Schritt S6 geprüft, ob Raddrehzahlsignale vorliegen. Falls diese Bedingung erfüllt ist, erfolgt in dem Schritt S7 eine blockiergeschützte Bremsung über die Feststellbremse anhand der Raddrehzahlsignale und darauf folgend wird der Schritt S1 erneut durchgeführt.

Andernfalls wird in dem Schritt S8 geprüft, ob ein Signal, welches von einer Drehzahl eines in dem Fahrzeug vorhandenen Motors 1, eines Getriebes 2 oder einer Antriebswelle 3 abhängig ist, vorliegt. Falls ja, wird in dem Schritt S9 eine blockiergeschützte Bremsung über die Feststellbremse anhand des Signals, welches von einer Drehzahl eines in dem Fahrzeug vorhandenen Motors 1, eines Getriebes 2 oder einer Antriebswelle 3 abhängig ist, durchgeführt. Darauf folgend wird der Schritt S1 erneut durchgeführt.

Andernfalls wird in dem Schritt S10 die Feststellbremse langsam gemäß einer Druck-Zeit-Funktion aktiviert, indem die Federspeicherteile der Federspeicherbremszylinder 24, 26 gemäß einer Druck-Zeit-Funktion, insbesondere gemäß einer Rampenfunktion, durch die elektrisch betätigbare Ventileinrichtung 114, 116, 132 langsam entlüftet werden. Durch das Verfahren wird eine optimale Bremsung des Fahrzeuges in Abhängigkeit des Zustandes der Bremsanlage des Fahrzeugs gewährleistet. So wird bei fahrendem Fahrzeug und bei einer intakten Betriebsbremsanlage eine blockiergeschützte Bremsung über ebendiese durchgeführt (S5). Bei nicht intakter Betriebsbremsanlage erfolgt die blockiergeschützte Bremsung über die Feststellbremse anhand der Raddrehzahlsignale (S7) oder falls diese nicht vorliegen anhand des Signals, welches von einer Drehzahl eines in dem Fahrzeug vorhandenen Motors 1 eines Getriebes 2 oder einer Antriebswelle 3 abhängig ist (S9). Falls weder Raddrehzahlsignale noch das Signal, welches von einer Drehzahl eines in dem Fahrzeug vorhandenen Motors 1, eines Getriebes 2 oder einer Antriebswelle 3 abhängig ist, vorliegen, werden die Federspeicherteile langsam entlüftet, um das Fahrzeug kontrolliert und nicht abrupt abzubremsen.

Die hier vorgestellten Verfahren werden bevorzugt in der elektrischen Steuereinheit 128 der Feststellbremse abgearbeitet. Es ist aber auch denkbar, die Verfahren oder Teile der Verfahren in anderen Steuereinheiten, wie z. B. dem Modul 28 oder in der Steuereinheit einer elektrischen Luftaufbereitungsanlage durchführen zu lassen.

## Patentansprüche

1. Feststellbremse einer Bremsanlage für ein Fahrzeug, **gekennzeichnet durch** eine Blockierschutzeinrichtung (5) der Feststellbremse, die anhand eines Signals, welches von einer Drehzahl eines in dem Fahrzeug vorhandenen Motors (1), eines Getriebes (2) oder einer Antriebswelle (3) abhängig ist, ein Blockieren oder einen überhöhten Schlupf eines durch die Feststellbremse (24, 26) bremsbaren Rades (16, 18) verhindert.

2. Feststellbremse nach Anspruch 1, **dadurch gekennzeichnet, dass** die Feststellbremse eine elektrische Steuereinrichtung (128) zur Steuerung einer elektrisch betätigbaren Ventileinrichtung (114, 116, 132) zur Be- und Entlüftung eines Federspeicherteils mindestens eines Federspeicherbremszylinders (24, 26) aufweist.

3. Feststellbremse nach Anspruch 1 oder 2, **dadurch gekennzeichnet, dass** die Blockierschutzeinrichtung einen Schlupf des Rades (16, 18) anhand des Signals ermittelt.

4. Feststellbremse nach Anspruch 3, **dadurch gekennzeichnet, dass** bei Vorliegen eines erhöhten Schlupfes die Feststellbremse zumindest teilweise lösbar ist.

5. Feststellbremse nach Anspruch 4, **dadurch gekennzeichnet, dass** bei einer Reduzierung des Schlupfs auf einen bestimmten Wert die Feststellbremse zumindest teilweise einlegbar ist.

6. Feststellbremse nach einem der vorherigen Ansprüche, **dadurch gekennzeichnet, dass** die Blockierschutzeinrichtung (5) anhand des Signals ein Referenzsignal bildet, welches die Geschwindigkeit des Fahrzeugs repräsentiert.

7. Feststellbremse nach Anspruch 6, **dadurch gekennzeichnet, dass** die Blockierschutzeinrichtung (5) eine Differenz zwischen dem Referenzsignal und dem Signal bildet.

8. Feststellbremse nach Anspruch 7, **dadurch gekennzeichnet, dass** die Blockierschutzeinrichtung (5) anhand der Differenz den Schlupf ermittelt.

9. Feststellbremse nach einem der vorherigen Ansprüche, **dadurch gekennzeichnet, dass** das Signal ein im Fahrzeug vorhandenes Tachosignal ist.

10. Feststellbremse nach einem der vorherigen Ansprüche, **dadurch gekennzeichnet, dass** die Blockierschutzeinrichtung (5) als Software-Modul realisiert ist.

11. Feststellbremse nach einem der vorherigen Ansprüche, **dadurch gekennzeichnet, dass** das Signal durch einen Drehzahlsensor (4) erzeugbar ist.

12. Bremsanlage eines Fahrzeugs mit einer Feststellbremse nach einem der vorherigen Ansprüche.

13. Verfahren zum Betrieb einer Feststellbremse einer Bremsanlage für ein Fahrzeug, **dadurch gekennzeichnet, dass** anhand eines Signals, welches von einer Drehzahl eines in dem Fahrzeug vorhandenen Motors (1), eines Getriebes (2) oder einer Antriebsweiie (3) abhängig ist, ein Blockieren oder ein überhöhter Schlupf eines durch die Feststellbremse (24, 26) bremsbaren Rades (16, 18) verhindert wird.

14. Verfahren nach Anspruch 13, **dadurch gekennzeichnet, dass** die Feststellbremse eine elektrischen Steuereinrichtung (128) zur Steuerung einer elektrisch betätigbaren Ventileinrichtung (114, 116, 132) aufweist durch die ein Federspeicherteil mindestens eines Federspeicherbremszylinders (24, 26) belüftet oder entlüftet wird.

15. Verfahren nach einem der Ansprüche 13 oder 14, **dadurch gekennzeichnet, dass** ein Schlupf des Rades (16, 18) anhand des Signals ermittelt wird.

16. Verfahren nach Anspruch 15, **dadurch gekennzeichnet, dass** bei Vorliegen eines erhöhten Schlupfes die Feststellbremse zumindest teilweise gelöst wird.

17. Verfahren nach Anspruch 16, **dadurch gekennzeichnet, dass** bei einer Reduzierung des Schlupfs um einen bestimmten Wert die Feststellbremse zumindest teilweise eingelegt wird.

18. Verfahren nach einem der vorherigen Ansprüche 13 bis 17, **dadurch gekennzeichnet, dass** anhand des Signals ein Referenzsignal gebildet wird, welches die Geschwindigkeit des Fahrzeugs repräsentiert.

19. Verfahren nach Anspruch 17, **dadurch gekennzeichnet, dass** eine Differenz zwischen dem Referenzsignal und dem Signal gebildet wird.

20. Verfahren nach Anspruch 19, **dadurch gekennzeichnet, dass** anhand der Differenz der Schlupf ermittelt wird.

21. Verfahren nach einem der vorherigen Ansprüche 13 bis 20, **dadurch gekennzeichnet, dass** das als Signal ein im Fahrzeug vorhandenes Tachosignal verwendet wird.

22. Verfahren nach einem der vorherigen Ansprüche 13 bis 21, **dadurch gekennzeichnet, dass** das Signal durch einen Drehzahlsensor (4) erzeugt wird.

23. Verfahren zum Betrieb einer Bremsanlage eines Fahrzeugs mit einer Feststellbremse nach einem der Ansprüche 1 bis 11 und einer Betriebsbremse, **dadurch gekennzeichnet, dass** eine Anforderung für die Betätigung der Feststellbremse durch eine Betätigung eines zu der Feststellbremse zugehörigen Feststellbremssignalgebers (82) oder durch ein Bremsanforderungssignal der Betriebsbremse generiert wird.

24. Verfahren nach Anspruch 23, **dadurch gekennzeichnet, dass** geprüft wird, ob das Fahrzeug fährt.

25. Verfahren nach Anspruch 24, **dadurch gekennzeichnet, dass** bei stehendem Fahrzeug die Feststellbremse eingelegt wird.

26. Verfahren nach Anspruch 24, **dadurch gekennzeichnet, dass** bei fahrendem Fahrzeug geprüft wird, ob eine blockiergeschütze Bremsung über die Betriebsbremse möglich ist.

27. Verfahren nach Anspruch 26, **dadurch gekennzeichnet, dass** eine blockiergeschütze Bremsung über die Betriebsbremse durchgeführt wird, falls eine blockiergeschütze Bremsung über die Betriebsbremse möglich ist.

28. Verfahren nach Anspruch 26, **dadurch gekennzeichnet, dass** bei nicht möglicher Bremsung über die Betriebsbremse geprüft wird, ob ein Raddrehzahlsignal mindestens eines Rades (16, 18) vorliegt.

29. Verfahren nach Anspruch 28, **dadurch gekennzeichnet, dass** bei Vorliegen eines Raddrehzahlsignales eine blockiergeschützte Bremsung anhand des Raddrehzahlsignales über die Feststellbremse durchgeführt wird.

30. Verfahren nach Anspruch 28, **dadurch gekennzeichnet, dass** bei nicht vorhandenem Raddrehzahlsignal geprüft wird, ob ein Signal, welches von einer Drehzahl eines in dem Fahrzeug vorhandenen Motors (1), eines Getriebes (2) oder einer Antriebswelle (3) abhängig ist, vorliegt.

31. Verfahren nach Anspruch 30, **dadurch gekennzeichnet, dass** bei vorhandenem Signal, welches von einer Drehzahl eines in dem Fahrzeug vorhandenen Motors (1), eines Getriebes (2) oder einer Antriebswelle (3) abhängig ist, eine blockiergeschützte Bremsung durch die Feststellbremse anhand des Signals, welches von einer Drehzahl eines in dem Fahrzeug vorhandenen Motors (1), eines Getriebes (2) oder einer Antriebswelle (3) abhängig ist, durchgeführt wird.

32. Verfahren nach Anspruch 30, **dadurch gekennzeichnet, dass** bei nicht vorhandenem Signal, welches von einer Drehzahl eines in dem Fahrzeug vorhandenen Motors (1), eines Getriebes (2) oder einer Antriebswelle (3) abhängig ist, die Feststellbremse gemäß einer Druck-Zeit-Funktion, insbesondere einer Rampenfunktion aktiviert wird.

## Claims

1. Parking brake of a brake system for a vehicle, **characterized by** an anti-lock brake device (5) of the parking brake, which prevents, on the basis of a signal which is dependent on a rotational speed of an engine (1), a transmission (2) or a drive shaft (3) which is present in the vehicle, locking or excessively increased slip at a wheel (16, 18) which can be braked by the parking brake (24, 26).

2. Parking brake according to Claim 1, **characterized in that** the parking brake has an electrical control device (128) for controlling an electrically actuable valve device (114, 116, 132) for ventilating and venting a spring store part of at least one spring-loaded brake cylinder (24, 26) .

3. Parking brake according to Claim 1 or 2, **characterized in that** the anti-lock brake device determines slip at the wheel (16, 18) on the basis of the signal.

4. Parking brake according to Claim 3, **characterized in that**, when increased slip is present, the parking brake can be at least partially released.

5. Parking brake according to Claim 4, **characterized in that**, when the slip is reduced to a specific value, the parking brake can be at least partially engaged.

6. Parking brake according to one of the preceding claims, **characterized in that** the anti-lock brake device (5) forms, on the basis of the signal, a reference signal which represents the speed of the vehicle.

7. Parking brake according to Claim 6, **characterized in that** the anti-lock brake device (5) forms a difference between the reference signal and the signal.

8. Parking brake according to Claim 7, **characterized in that** the anti-lock brake device (5) determines the slip on the basis of the difference.

9. Parking brake according to one of the preceding claims, **characterized in that** the signal is a tacho signal which is present in the vehicle.

10. Parking brake according to one of the preceding claims, **characterized in that** the anti-lock brake device (5) is implemented as a software module.

11. Parking brake according to one of the preceding claims, **characterized in that** the signal can be generated by a rotational speed sensor (4).

12. Brake system of a vehicle having a parking brake according to one of the preceding claims.

13. Method for operating a parking brake of a brake system for a vehicle, **characterized in that** locking or excessively increased slip at a wheel (16, 18) which can be braked by the parking brake (24, 26) is prevented on the basis of a signal which is dependent on a rotational speed of an engine (1), a transmission (2) or a drive shaft (3) which is present in the vehicle.

14. Method according to Claim 13, **characterized in that** the parking brake has an electrical control device (128) for controlling an electrically actuable valve device (114, 116, 132) by means of which a spring store part of at least one spring-loaded brake cylinder (24, 26) can be ventilated or vented.

15. Method according to one of Claims 13 or 14, **characterized in that** slip at the wheel (16, 18) is determined on the basis of the signal.

16. Method according to Claim 15, **characterized in that**, when increased slip is present, the parking brake is at least partially released.

17. Method according to Claim 16, **characterized in that**, when the slip is reduced by a specific value, the parking brake is at least partially engaged.

18. Method according to one of preceding Claims 13 to 17, **characterized in that** a reference signal which represents the speed of the vehicle is formed on the basis of the signal.

19. Method according to Claim 17, **characterized in that** a difference between the reference signal and the signal is formed.

20. Method according to Claim 19, **characterized in that** the slip is determined on the basis of the difference.

21. Method according to one of preceding Claims 13 to 20, **characterized in that** a tacho signal which is present in the vehicle is used as the signal.

22. Method according to one of preceding Claims 13 to 21, **characterized in that** the signal is generated by a rotational speed sensor (4).

23. Method for operating a brake system of a vehicle having a parking brake according to one of Claims 1 to 11 and a service brake, **characterized in that** a request for the actuation of the parking brake is generated by actuating a parking brake signal generator (82) which is associated with the parking brake or by means of a brake request signal of the service brake.

24. Method according to Claim 23, **characterized in that** it is tested whether the vehicle is traveling.

25. Method according to Claim 24, **characterized in that**, when the vehicle is stationary, the parking brake is engaged.

26. Method according to Claim 24, **characterized in that**, when the vehicle is traveling, it is tested whether braking with anti-lock protection is possible by means of the service brake.

27. Method according to Claim 26, **characterized in that** braking with anti-lock protection is carried out by means of the service brake if braking with anti-lock protection is possible by means of the service brake.

28. Method according to Claim 26, **characterized in that**, when braking by means of the service brake is not possible, it is tested whether a wheel speed signal of at least one wheel (16, 18) is present.

29. Method according to Claim 28, **characterized in that**, when a wheel speed signal is present, braking with anti-lock protection is carried out on the basis of the wheel speed signal by means of the parking brake.

30. Method according to Claim 28, **characterized in that**, when a wheel speed signal is not present, it is tested whether a signal which is dependent on a rotational speed of an engine (1), a transmission (2) or a drive shaft (3) which is present in the vehicle is present.

31. Method according to Claim 30, **characterized in that**, when a signal which is dependent on a rotational speed of an engine (1), a transmission (2) or a drive shaft (3) which is present in the vehicle is present, braking with anti-lock protection is carried out by the parking brake on the basis of the signal which is dependent on a rotational speed of an engine (1), a transmission (2) or a drive shaft (3) which is present in the vehicle.

32. Method according to Claim 30, **characterized in that**, when a signal which is dependent on a rotational speed of an engine (1), a transmission (2) or a drive shaft (3) which is present in the vehicle is not present, the parking brake is activated in accordance with a pressure/time function, in particular a ramp function.

## Revendications

1. Frein de stationnement d'une installation de freinage pour un véhicule, **caractérisé par** un dispositif de protection d'antiblocage (5) du frein de stationnement qui, à l'aide d'un signal dépendant d'une vitesse de rotation d'un moteur (1), d'une boîte de vitesses (2) ou d'un arbre d'entraînement (3) prévus dans le véhicule, empêche un blocage ou un patinage excessif d'une roue (16, 18) pouvant être freinée par le frein de stationnement (24, 26).

2. Frein de stationnement selon la revendication 1, **caractérisé en ce que** le frein de stationnement présente un dispositif de commande électrique (128) pour commander un dispositif de soupape à commande électrique (114, 116, 132) pour la ventilation et le désaérage d'une partie d'accumulateur à ressort d'au moins un cylindre de frein à accumulateur à ressort (24, 26).

3. Frein de stationnement selon la revendication 1 ou 2, **caractérisé en ce que** le dispositif de protection d'antiblocage détermine un patinage de la roue (16, 18) à l'aide du signal.

4. Frein de stationnement selon la revendication 3, **caractérisé en ce qu'**en présence d'un patinage accru, le frein de stationnement est au moins en partie desserré.

5. Frein de stationnement selon la revendication 4, **caractérisé en ce que** dans le cas d'une réduction du patinage à une valeur déterminée, le frein de stationnement peut être au moins en partie serré.

6. Frein de stationnement selon l'une quelconque des revendications précédentes, **caractérisé en ce que** le dispositif de protection d'antiblocage (5) forme à l'aide du signal un signal de référence qui représente la vitesse du véhicule.

7. Frein de stationnement selon la revendication 6, **caractérisé en ce que** le dispositif de protection d'antiblocage (5) produit une différence entre le signal de référence et le signal.

8. Frein de stationnement selon la revendication 7, **caractérisé en ce que** le dispositif de protection d'antiblocage (5) détermine le patinage à l'aide de la différence.

9. Frein de stationnement selon l'une quelconque des revendications précédentes, **caractérisé en ce que** le signal est un signal du tachymètre présent dans le véhicule.

10. Frein de stationnement selon l'une quelconque des revendications précédentes, **caractérisé en ce que** le dispositif de protection d'antiblocage (5) est réalisé sous forme de module de logiciel.

11. Frein de stationnement selon l'une quelconque des revendications précédentes, **caractérisé en ce que** le signal peut être généré par un capteur de vitesse de rotation (4).

12. Installation de freinage d'un véhicule comprenant un frein de stationnement selon l'une quelconque des revendications précédentes.

13. Procédé de fonctionnement d'un frein de stationnement d'une installation de freinage d'un véhicule, **caractérisé en ce qu'**à l'aide d'un signal dépendant d'une vitesse de rotation d'un moteur (1), d'une boîte de vitesses (2) ou d'un arbre d'entraînement (3) présents dans le véhicule, un blocage ou un patinage excessif d'une roue (16, 18) pouvant être freinée par le frein de stationnement (24, 26) est empêché.

14. Procédé selon la revendication 13, **caractérisé en ce que** le frein de stationnement présente un dispositif de commande électrique (128) pour commander un dispositif de soupape à commande électrique (114, 116, 132) par le biais duquel une partie d'accumulateur à ressort d'au moins un cylindre de frein à accumulateur à ressort (24, 26) peut être ventilée ou désaérée.

15. Procédé selon l'une quelconque des revendications 13 ou 14, **caractérisé en ce qu'**un patinage de la roue (16, 18) est déterminé à l'aide du signal.

16. Procédé selon la revendication 15, **caractérisé en ce qu'**en présence d'un patinage accru, le frein de stationnement est au moins en partie desserré.

17. Procédé selon la revendication 16, **caractérisé en ce que** dans le cas d'une réduction du patinage à une valeur déterminée, le frein de stationnement est au moins en partie serré.

18. Procédé selon l'une quelconque des revendications précédentes 13 à 17, **caractérisé en ce qu'**un signal de référence qui représente la vitesse du véhicule est produit à l'aide du signal.

19. Procédé selon la revendication 17, **caractérisé en ce qu'**une différence entre le signal de référence et le signal est produite.

20. Procédé selon la revendication 19, **caractérisé en ce que** le patinage est déterminé à l'aide de la différence.

21. Procédé selon l'une quelconque des revendications précédentes 13 à 20, **caractérisé en ce que** l'on utilise en tant que signal un signal du tachymètre présent dans le véhicule.

22. Procédé selon l'une quelconque des revendications précédentes 13 à 21, **caractérisé en ce que** le signal est généré par un capteur de vitesse de rotation (4).

23. Procédé de fonctionnement d'une installation de freinage d'un véhicule comprenant un frein de stationnement selon l'une quelconque des revendications 1 à 11 et un frein de service, **caractérisé en ce qu'**une demande d'actionnement du frein de stationnement est générée par un actionnement d'un détecteur de signal de frein de stationnement (82) appartenant au frein de stationnement ou par un signal de demande de freinage du frein de service.

24. Procédé selon la revendication 23, **caractérisé en ce que** l'on vérifie si le véhicule est en mouvement.

25. Procédé selon la revendication 24, **caractérisé en ce que** le frein de stationnement est serré lorsque le véhicule est à l'arrêt.

26. Procédé selon la revendication 24, **caractérisé en ce que** l'on vérifie, lorsque le véhicule est en mouvement, si un freinage avec protection d'antiblocage est possible par le biais du frein de service.

27. Procédé selon la revendication 26, **caractérisé en ce qu'**un freinage avec une protection d'antiblocage est effectué par le biais du frein de service si un freinage avec une protection d'antiblocage est possible par le biais du frein de service.

28. Procédé selon la revendication 26, **caractérisé en ce que** lorsqu'un freinage par le biais du frein de service n'est pas possible, on vérifie s'il existe un signal de vitesse de rotation de roue d'au moins une roue (16, 18).

29. Procédé selon la revendication 28, **caractérisé en ce qu'**en présence d'un signal de vitesse de rotation de roue, un freinage avec une protection d'antiblocage est effectué à l'aide du signal de vitesse de rotation de roue par le biais du frein de stationnement.

30. Procédé selon la revendication 28, **caractérisé en ce qu'**en l'absence d'un signal de vitesse de rotation de roue, on vérifie s'il existe un signal dépendant de la vitesse de rotation d'un moteur (1), d'une boîte de vitesses (2) ou d'un arbre d'entraînement (3) présents dans le véhicule.

31. Procédé selon la revendication 30, **caractérisé en ce qu'**en présence d'un signal dépendant d'une vitesse de rotation d'un moteur (1), d'une boîte de vitesses (2) ou d'un arbre d'entraînement (3) présents dans le véhicule, un freinage avec une protection d'antiblocage est effectué par le frein de stationnement à l'aide du signal dépendant d'une vitesse d'un moteur (1), d'une boîte de vitesses (2) ou d'un arbre d'entraînement (3) présents dans le véhicule.

32. Procédé selon la revendication 30, **caractérisé en ce qu'**en l'absence d'un signal dépendant d'une vitesse de rotation d'un moteur (1), d'une boîte de vitesses (2) ou d'un arbre d'entraînement (3) présents dans le véhicule, le frein de stationnement est activé de manière correspondant à une fonction pression-temps, en particulier une fonction de rampe.
